# FASCICULE DE BREVET EUROPEEN

(11) **EP 2 879 859 B1**
(45) Date de publication et mention de la délivrance du brevet: **23.08.2017**
(21) Numéro de dépôt: 13758930.5
(22) Date de dépôt: 05.08.2013
(51) Int. Cl.: B29C 70/34, B29C 70/54, B29C 70/86, B29C 33/02, B29C 33/38

(54) **PROCÉDÉ DE FABRICATION D'UN OUTILLAGE DE MOULAGE DESTINÉ AU MOULAGE D'UNE PIÈCE EN MATÉRIAU COMPOSITE**
VERFAHREN ZUR HERSTELLUNG EINER FORM ZUM FORMEN EINES VERBUNDTEILS
METHOD FOR PRODUCING A MOULD INTENDED FOR MOULDING A COMPOSITE PART

(30) Priorité: 03.08.2012 FR 1257593
(43) Date de publication de la demande: 10.06.2015
(73) Titulaire: Techni-Modul Engineering, 63114 Coudes (FR)
(72) Inventeur: LUQUAIN, Serge, 63340 Saint Germain Lembron (FR)
(74) Mandataire: Chevalier, Renaud Philippe
(86) Numéro de dépôt international: PCT/FR2013/051879
(87) Numéro de publication internationale: WO 2014/020292

(56) Documents cités:
- EP-A1- 2 505 327
- WO-A1-2011/029276
- CN-A- 101 439 559

## Description

L'invention concerne le domaine de l'outillage de moulage, et plus particulièrement de moulage de pièces en matériau composite de grandes dimensions, utilisées notamment dans le domaine de l'aéronautique, du nautisme ou de l'éolien.

Dans certains secteurs d'activités, tels que celui de l'aéronautique, du nautisme ou de l'éolien, de nombreuses pièces, souvent de grandes dimensions, sont réalisées en matériaux composites. L'optimisation et le paramétrage de la forme de ces pièces ont fait l'objet d'études très poussées. C'est pourquoi, lors de la réalisation en série de ces pièces, et plus précisément lors de leur moulage, il est essentiel de disposer d'un outillage de moulage de qualité et de haute précision permettant d'obtenir une pièce moulée, dont la forme se conforme parfaitement aux paramètres déterminés lors de sa mise au point et ne présentant aucun défaut.

Par matériau composite, on entend dans le cadre de la présente invention, un matériau constitué :
- d'une ossature (ou autrement dit d'un renfort) réalisée à partir de fibres, qui assure la tenue mécanique du matériau composite
   et
- d'une matrice, en l'occurrence une résine thermodurcissable ou bien une résine thermoplastique, qui assure la cohésion du matériau composite.

Lorsque la résine est une résine thermodurcissable, l'outillage de moulage doit être soumis à un cycle thermique parfaitement établi en fonction du procédé de moulage choisi et de la nature de la résine, de manière à obtenir le durcissement adéquat de la résine, de par sa polymérisation, au sein du réseau de fibres. Le cycle thermique comprend généralement les étapes suivantes :
1) une 1^{ière} montée en température depuis la température ambiante jusqu'à une température d'un 1^{ier} palier de maintien (à environ 100°C) ;
2) le maintien de la température à ce 1^{ier} palier de température pendant une durée déterminée ;
3) une 2^{ieme} montée en température depuis la température du 1^{ier} palier de maintien jusqu'à une température d'un 2^{ième} palier de maintien (à environ 180°C) ;
4) le maintien de la température à ce 2^{ième} palier de température pendant une durée déterminée. Au cours de cette étape s'effectue le durcissement de la résine thermodurcissable (ou autrement dit sa polymérisation ou sa réticulation) ;
5) une descente en température depuis la température du 2^{ième} palier de maintien jusqu'à la température de démoulage (d'environ 60°C).

En fonction du procédé de moulage choisi, le nombre de paliers de maintien de température peut varier de 1 à 10.

Lorsque la résine est une résine thermoplastique, l'outillage de moulage doit être aussi soumis à un cycle thermique parfaitement établi en fonction du procédé de moulage choisi et de la nature de la résine, de manière à obtenir le durcissement adéquat de la résine au sein du réseau de fibres. Dans ce cas, le cycle thermique peut comprendre une seule étape de montée en température et une seule étape de refroidissement. Il n'y a pas nécessité de maintien de température tel que cela a été décrit ci-dessus dans le cas d'une résine thermodurcissable.

Pendant la phase de refroidissement du cycle thermique, si l'outillage de moulage est réalisé en acier ou en aluminium, il exerce des contraintes mécaniques sur la pièce en matériau composite tout juste moulée. En effet, le coefficient de dilatation thermique d'un matériau composite est généralement de l'ordre de 2,5.10⁻⁶ K⁻¹ soit inférieur à celui de l'acier (12.10⁻⁶ K¹) ou de l'aluminium (24.10⁻⁶ K⁻¹) dont est habituellement constitué l'outillage de moulage. C'est pourquoi, lors du refroidissement, la pièce moulée en matériau composite se trouve « prise en étau » par l'outillage de moulage, du fait de la rétractation plus importante de l'outillage de moulage que celle de la pièce moulée en matériau composite. Cela peut dégrader considérablement la pièce moulée en entraînant l'apparition de fêlures, voire la briser, et ce tout particulièrement si celle-ci est de grandes dimensions. Par exemple, sur un outillage de moulage en acier d'une longueur de 4m, une rétractation de l'ordre de 7 mm peut se produire.

Afin de s'affranchir de ce problème causé par la différence de rétractation entre l'outillage de moulage et la pièce moulée lors du refroidissement, il est possible d'envisager de démouler à chaud la pièce tout juste moulée, soit généralement à une température de l'ordre de 180°C. Cependant, cette solution se heurte à des problèmes de sécurité.

Il est aussi possible d'utiliser un outillage de moulage en un acier commercialisé sous la dénomination commerciale INVAR ®. En effet, l'INVAR® est un acier à coefficient de dilatation thermique de 1,2.10⁻⁶ K⁻¹ qui, par conséquent, n'induit pas de contraintes mécaniques dans la pièce en matériau composite lors de l'étape de refroidissement. Cependant, cet alliage est très coûteux, de l'ordre de dix fois le coût d'un acier dont est habituellement constitué un outillage de moulage.

Il a été aussi envisagé de disposer d'un outillage de moulage réalisé lui aussi en un matériau composite. De cette façon, l'outillage de moulage et la pièce moulée étant constitués d'un même matériau, il ne se pose plus le problème causé par la différence de rétractation entre l'outillage de moulage et la pièce moulée lors du refroidissement.

En outre, la gestion des étapes du cycle thermique décrit ci-dessus est réalisée grâce à un fluide caloporteur circulant à l'intérieur de l'outillage de moulage.

Il est essentiel que la circulation du fluide caloporteur soit conçue et dimensionnée de façon à respecter les vitesses de montée et de descente en température, ainsi que les homogénéités thermiques des paliers de maintien de température.

Pour cela, il faut que :
- la surface d'échange entre le fluide caloporteur et l'outillage de moulage soit suffisante pour fournir la puissance nécessaire au respect des vitesses de montée et de descente en température du cycle thermique.
- le positionnement du circuit de fluide caloporteur au sein de l'outillage de moulage soit défini précisément, afin de respecter les homogénéités thermiques aux paliers de maintien en température. De manière avantageuse, la distance entre le circuit de fluide caloporteur et la surface moulante de l'outillage de moulage doit être constante.

Afin de permettre la réalisation d'un circuit du fluide caloporteur à l'intérieur de l'outillage de moulage se conformant aux exigences précitées, plusieurs solutions, telles que le forage, l'intégration de tubes ou encore le rainurage ont été mises en oeuvre lors de la fabrication d'un outillage de moulage.

Cependant, ces différentes solutions présentent des inconvénients.

La solution de forage qui consiste à forer des passages cylindriques dans l'outillage de moulage n'est pas adaptée à des formes de coquille complexes dont peut être constitué l'outillage de moulage. En effet, les forages étant droits, il est difficile de réaliser un passage à une distance constante de la surface moulante de l'outillage de moulage en tous points. De plus, cette technique est limitée en dimensions. La longueur droite maximale réalisable par forage est de l'ordre de 12 mètres.

La solution du rainurage et de l'assemblage consiste à réaliser des rainures dans l'outillage de moulage pour créer le passage de fluide caloporteur. Une plaque est ensuite rapportée et vissée afin de fermer le circuit de fluide caloporteur. Un joint torique est implanté à l'extérieur de ce rainurage entre la coquille de l'outillage de moulage et la plaque de manière à assurer l'étanchéité du circuit du fluide caloporteur. Cette technique est aussi limitée à des outillages de moulage de forme peu complexe. De plus, elle est réalisée par usinage et demeure coûteuse. Enfin, en fonction de la durée de vie de l'outillage de moulage, cette solution pourra nécessiter de la maintenance (par exemple le remplacement du joint torique).

Enfin, la solution de l'intégration de tubes consiste à intégrer des tubes à l'étape de réalisation du bloc matière par fonderie ou par soudure. Elle est limitée à des outillages de moulage réalisés en fonderie ou à des outillages de moulage de forme peu complexe (intégration par soudure). Par ailleurs, cette technique génère une interface thermique supplémentaire (tube) entre le fluide caloporteur et la surface moulante de l'outillage de moulage. Cela a pour conséquence de dégrader les performances thermiques (vitesse et homogénéité) de l'outillage de moulage.

En outre, au cours du moulage d'une pièce en matériau composite, l'outillage de moulage peut être soumis à des températures élevées de l'ordre de 180°C. Or, lorsqu'on soumet l'outillage à de telles températures, l'outillage de moulage, ainsi que les tubes qui sont réalisés en des matériaux différents vont avoir tendance à se dilater différemment, du fait de leurs coefficients de dilatation thermique différents. Cette différence de dilatation peut avoir les conséquences suivantes :
- Dans certains cas, les tubes se dilatant, cela induit des déformations de l'outillage de moulage qui peuvent conduire jusqu'à des fissures, voire même à un éclatement de l'outillage de moulage. Plus la température à laquelle est soumis l'outillage de moulage est élevée, plus ces défauts s'accroissent.
- Les tubes glissent à l'intérieur de l'outillage de moulage. La qualité de la surface d'échange entre le fluide caloporteur et l'outillage de moulage n'est alors plus garantie. Du fait, du déplacement du circuit du fluide caloporteur, les homogénéités thermiques aux paliers de maintien en température ne sont plus respectées.

Une solution à ce problème de différence de dilatation thermique pourrait consister à rigidifier l'outillage de moulage, par exemple en augmentant son épaisseur. Cela permettrait en effet de diminuer la déformation induite par la dilatation thermique des tubes. Cependant, cette solution présente l'inconvénient d'augmenter le poids de l'outillage de moulage, ainsi que les coûts des matériaux pour le fabriquer. Autrement dit, cette solution n'est pas pleinement satisfaisante.

C'est pourquoi, lorsqu'on opte pour la réalisation du circuit de fluide caloporteur formé à partir de tubes, il est essentiel de choisir de manière appropriée le matériau dont sont constitués les tubes, afin d'éviter des détériorations qui peuvent être fatales pour l'outillage de moulage au cours de son utilisation à des températures élevées de l'ordre de 180°C.

En outre, le matériau composite, en particulier lorsqu'il est principalement constitué de fibres de carbone et de résine époxyde, est un matériau difficile à usiner. Il nécessite l'utilisation d'outils coupants spécifiques et onéreux. Par ailleurs, les poussières générées pendant l'usinage d'un tel matériau composite sont dangereuses pour l'opérateur et nécessite de prendre des précautions contraignantes.

Des documents tels que WO2011/029276 ou CN101439559 présentent des outillages de moulage réalisés par empilement de fibres et intégrant un circuit de fluide caloporteur, sans toutefois décrire spécifiquement le mode de réalisation. On comprend aisément de cette description de l'état de l'art en matière d'outillage de moulage que la conception et la mise au point d'un outillage de moulage destiné au moulage d'une pièce en matériau composite se révèlent particulièrement complexes. En particulier, les procédés connus de fabrication d'outillage de moulage ne sont pas bien adaptés pour la réalisation d'un circuit de fluide caloporteur qui puisse parcourir, de manière optimale pour les échanges thermiques, toute la surface moulante de l'outillage de moulage.

La présente invention remédie à l'ensemble de ces inconvénients en proposant un procédé de fabrication d'un outillage de moulage qui est parfaitement approprié au moulage de toute pièce en matériau composite.

Le procédé de fabrication d'un outillage de moulage destiné au moulage d'une pièce en matériau composite selon l'invention se caractérise en ce qu'il comprend les étapes suivantes :
a) On dispose d'un support.
b) On dispose sur le support un premier empilement de fibres de renfort qui sont éventuellement imprégnées d'une résine thermodurcissable ou d'une résine thermoplastique.
c) On dispose sur le premier empilement de fibres de renfort un circuit comprenant au moins un tube en un matériau à faible coefficient de dilatation thermique, ledit circuit ayant la forme d'un circuit de fluide caloporteur adapté à l'outillage de moulage.
d) On dispose sur le circuit un deuxième empilement de fibres de renfort qui sont éventuellement imprégnées d'une résine thermodurcissable ou d'une résine thermoplastique.
e) On comprime l'ensemble constitué par le premier empilement de fibres de renfort, le circuit, le deuxième empilement de fibres de renfort, et le cas échéant lorsque les fibres de renfort ne sont pas imprégnées d'une résine thermoplastique ou thermodurcissable, on infuse une résine thermoplastique ou thermodurcissable.
f) On effectue un cycle thermique, ledit cycle thermique étant conçu de manière à durcir la résine thermodurcissable ou la résine thermoplastique pour obtenir une forme moulée.
g) On démoule la forme moulée obtenue à l'issue de l'étape f). Par circuit de fluide caloporteur adapté à l'outillage de moulage, on entend dans le cadre de la présente invention que le circuit de fluide caloporteur est adapté à :
   - la forme géométrique de l'outillage de moulage ;
   - la régulation thermique de l'outillage de moulage.

A l'étape e) du procédé de fabrication selon l'invention, le cas échéant lorsque les fibres de renfort ne sont pas imprégnées d'une résine thermoplastique ou thermodurcissable, on infuse une résine thermoplastique ou thermodurcissable de manière à imprégner de résine lesdites fibres de renfort.

De plus, l'outillage de moulage obtenu selon le procédé de fabrication de l'invention présente les avantages suivants :
- L'étanchéité du circuit du fluide caloporteur peut être vérifiée avant sa mise en place sur le premier empilement de fibres de renfort. Ainsi, cela évite le risque d'obstruction du circuit de fluide caloporteur par de la résine qui rendrait inutilisable l'outillage de moulage.
- Lors des opérations de moulage avec l'outillage de moulage obtenu selon le procédé de fabrication de l'invention, le circuit de fluide caloporteur peut être soumis à une pression élevée de l'ordre de 30 bars, sans risque de délaminage du matériau composite dont est constitué l'outillage de moulage.
- La surface du circuit de fluide caloporteur étant lisse, la perte de charge est peu élevée, car le passage du fluide caloporteur est facilité.

Par ailleurs, le procédé de fabrication selon l'invention présente l'avantage de ne pas nécessiter d'étape d'usinage du matériau composite dont il est constitué. Or, il est connu que l'usinage de matériau constitué de fibres de carbone et de résine époxyde est difficile et requiert l'utilisation d'outils coupants spécifiques et onéreux. Le procédé de fabrication s'affranchit de tous ces problèmes d'usinage.

Les fibres de renfort sont avantageusement choisies dans le groupe constitué par les fibres de carbone, les fibres de verre, les fibres d'aramides, les fibres métalliques (par exemple en aluminium), les fibres végétales telles que les fibres du bois et les fibres de coton, les fibres de céramique, prises seules ou en mélanges de celles-ci.

La résine thermodurcissable peut être choisie dans le groupe constitué par les résines polyesters insaturés, les résines époxyde, les résines vinylester, les résines phénoliques, les résines polyimides, les résines polystyrylpyridine.

La résine thermoplastique peut être choisie dans le groupe constitué par les polyéther éther cétone, les polyamides, les polyétherimides, les polyéthylènes, les polystyrènes, les polypropènes.

Le matériau à faible coefficient de dilatation thermique du tube est avantageusement choisi parmi les matériaux dont le coefficient de dilatation thermique est inférieur à 25.10⁻⁶ K⁻¹, de préférence compris entre 1 10⁻⁶ K⁻¹et 3,5 10⁻⁶ K⁻¹, encore plus préférentiellement compris entre 1,5 10⁻⁶ K⁻¹ et 3,5 10⁻⁶ K⁻¹.

De manière préférée, le matériau à faible coefficient de dilatation thermique du tube est choisi dans le groupe constitué par l'acier, l'acier inoxydable, le cuivre, le carbone, les alliages métalliques, le titane, les céramiques et les matériaux composites.

De préférence, il s'agit de l'acier, et encore plus préférentiellement de l'INVAR ®.

Le matériau du tube est choisi de manière appropriée pour que son coefficient de dilatation thermique soit proche de celui du matériau composite (à savoir un mélange de fibres de renfort et de résine) que comprend l'outillage de moulage obtenu à l'issue du procédé de fabrication selon l'invention.

Pour ce faire, dans la pratique, le coefficient de dilatation thermique du matériau composite (à savoir ce mélange de fibres de renfort et de résine) que comprend l'outillage de moulage pourra être évalué au cours de tests avant la mise en oeuvre du procédé de fabrication selon l'invention. Cela permettra de choisir le matériau du tube dont le coefficient de dilatation thermique est le plus proche de celui du matériau composite ainsi évalué, et donc le plus approprié pour la fabrication de l'outillage de moulage selon l'invention.

Par coefficients de dilatation thermiques proches, on entend que la différence entre ces coefficients, exprimée en valeur absolue, est avantageusement inférieure à 10, de préférence inférieure à 3.

De cette manière, lorsque l'outillage de moulage sera soumis à des cycles de polymérisation à des températures élevées au cours du moulage d'une pièce, l'outillage de moulage et les tubes formant le circuit de fluide caloporteur se dilateront sans qu'il ne se produise une différence de dilatation importante entre les matériaux qui les constituent et qui pourrait être à l'origine de glissements des tubes, voire de fissures et d'éclatement de l'outillage de moulage.

Aussi, l'outillage de moulage obtenu selon le procédé de fabrication ne posera pas de problème causé par la différence de rétractation entre l'outillage de moulage, le circuit composé d'un tube en un matériau de faible coefficient de dilatation thermique et la pièce moulée en un matériau composite lors du refroidissement, puisque les matériaux utilisés ont approxivativement la même dilatation thermique.

Enfin, du fait que le matériau du tube est choisi de manière adéquate pour que ne se pose pas le problème de différence de dilatation thermique entre le tube et le matériau composite que comprend l'outillage de moulage, le procédé selon l'invention présente aussi l'avantage de ne pas nécessiter de fabriquer un outillage de moulage rigide, par exemple d'épaisseur importante. Dans un mode de réalisation avantageux de l'invention, ce matériau a en outre un allongement à la rupture supérieur à 5%. Le matériau dispose alors d'une élongation suffisante pour permettre le cintrage des tubes et ainsi réaliser un circuit du fluide caloporteur fiable.

Dans un mode de réalisation avantageux de l'invention, le circuit comprend un unique tube en un acier à faible coefficient de dilatation thermique, par exemple de l'INVAR®.

La mise en forme du circuit est réalisée par tout procédé à la portée de l'homme du métier, tel que le cintrage, le soudage, le pliage, le collage et le brasage. Une forme complexe et de grande dimension du circuit du fluide caloporteur est techniquement aisément obtenue avec le procédé de fabrication selon l'invention. En effet, le circuit de fluide caloporteur peut se présenter sous la forme d'un tube qu'on dispose avec précision sur le premier empilement de fibres de renfort pour qu'il assure parfaitement sa fonction de transport de chaleur de manière homogène au sein de l'ensemble de l'outillage de moulage.

Le procédé de fabrication d'un outillage de moulage selon l'invention propose ainsi une réalisation du circuit du fluide caloporteur au sein de l'outillage de moulage ne nécessitant pas de moyens techniques complexes, ni dangereux d'un point de vue de la sécurité.

La pièce moulée grâce à l'outillage de moulage obtenu selon le procédé de fabrication tel que décrit ci-dessus est moulée dans des conditions tout à fait adéquates de moulage, puisque l'outillage de moulage est parcouru de manière optimale par le circuit de fluide de caloporteur, et ainsi toutes les parties la pièce en matériau composite ont bénéficié des mêmes échanges thermiques.

Selon un mode de réalisation de l'invention, on dispose à l'étape b) un empilement de fibres de renfort qui ont été imprégnées d'une résine thermoplastique ou thermodurcissable, l'ensemble constitué par les fibres de renfort et la résine se présentant sous la forme d'un tissu composite.

Selon ce mode de réalisation de l'invention, l'étape b) est réalisée en répétant successivement les opérations suivantes jusqu'à l'obtention d'un premier empilement de fibres de renfort d'une épaisseur déterminée :
i. on dispose une pluralité de tissus composites (par exemple 2 à 3) les uns sur les autres de manière à former un empilement de tissus composites ;
ii. on comprime l'empilement de tissus composites en instaurant le vide, et ce par exemple en les recouvrant d'un film perforé, d'un tissu drainant et d'une bâche à vide ;
iii. optionnellement, on soumet l'empilement de tissus composites à un cycle thermique approprié pour durcir la résine dont sont imprégnées les fibres de renfort des tissus composites.

Ainsi à l'issue de l'étape ii), le cas échéant à l'issue de l'étape iii), on peut disposer sur l'empilement de tissus composites ainsi obtenu plusieurs tissus composites pour effectuer à nouveau les étapes i) à ii), le cas échéant les étapes i) à iii).

Il convient de noter qu'avec ce mode de réalisation de l'invention, il est envisageable de ne pas effectuer l'étape iii), ou bien de ne pas effectuer systématiquement cette étape iii) de durcissement de la résine, mais de répéter successivement seulement les étapes i) et ii).

En d'autres termes, dans une certaine variante de ce mode de réalisation de l'invention, la résine présente dans l'ensemble des empilements de tissus composites peut ne pas avoir été durcie à l'issue de l'étape b), si l'on a seulement répété successivement les étapes i) et ii).

Selon un mode de réalisation de l'invention, on dispose à l'étape d) un deuxième empilement de fibres de renfort qui ont été imprégnées d'une résine thermoplastique ou thermodurcissable (autrement dit, on dispose un empilement de tissus composites).

Selon ce mode de réalisation de l'étape d), on répète successivement les opérations suivantes jusqu'à l'obtention d'un deuxième empilement de fibres de renfort d'une épaisseur déterminée :
i. on dispose une pluralité de tissus composites (par exemple 2 à 3) les uns sur les autres de manière à former un empilement de tissus composites ;
ii. on comprime l'empilement de tissus composites en instaurant le vide, et ce par exemple en les recouvrant d'un film perforé, d'un tissu drainant et d'une bâche à vide ;
iii. optionnellement, on soumet l'empilement de tissus composites à un cycle thermique approprié pour durcir la résine dont sont imprégnées les fibres de renfort des tissus composites,
et on achève la répétition desdites opérations i) à ii), le cas échéant i) à iii), par une étape i).

Ainsi à l'issue de l'étape ii), le cas échéant de l'étape iii), on peut disposer sur l'empilement de tissus composites ainsi obtenu une pluralité de tissus composites pour effectuer à nouveau les étapes i) à ii), le cas échéant les étapes i) à iii).

Il est à noter que lorsqu'à l'étape ii) on comprime l'empilement de tissus composites, on comprime l'ensemble constitué par le premier empilement de fibres de renfort, le circuit de fluide caloporteur et l'empilement de tissus composites constituant le deuxième empilement de fibres de renfort.

En d'autres termes, lorsqu'on répète plusieurs fois les étapes i) et ii), le cas échéant les étapes i) à iii), l'étape d) s'achève par une étape i) au cours de laquelle on dispose des tissus composites sur l'empilement de tissus composites précédent. L'étape suivante est l'étape e) du procédé selon l'invention, au cours de laquelle on comprime l'ensemble constitué par le premier empilement de fibres de renfort, le circuit et le deuxième empilement de fibres de renfort.

Selon un autre mode de réalisation de l'invention, on réalise l'étape b) de la manière suivante :
i. On dispose des fibres de renfort sur le support ;
ii. On comprime les fibres de renfort en instaurant le vide, et ce par exemple en les recouvrant d'un tissu d'arrachage, d'un tissu drainant et d'une bâche à vide.
iii. On infuse de la résine thermodurcissable ou thermoplastique de manière à imprégner de résine les fibres de renfort.

Ensuite selon ce mode de réalisation de l'invention, on peut réaliser l'étape e) de la manière suivante :
- on comprime l'ensemble constitué par le premier empilement de fibres de renfort, le circuit et le deuxième empilement de fibres de renfort en instaurant le vide, et ce par exemple en recouvrant le deuxième empilement de fibres de renfort d'un tissu d'arrachage, d'un tissu drainant et d'une bâche à vide;
- on infuse une résine thermoplastique ou thermodurcissable de manière à imprégner de résine les fibres de renfort.

Dans le cadre de la présente invention, on entend par « instaurer le vide » qu'on crée une dépression de l'ordre de 1 bar. Pour renforcer l'effort de compression, cette étape de compactage peut être réalisée dans un autoclave.

Selon un mode de réalisation préféré de l'invention, la face moulante de l'outillage de moulage est constituée par la face qui était en contact avec le support jusqu'à l'étape g) de démoulage. Dans ce mode de réalisation, il doit avoir été tenu compte lors de la conception du support de la différence de rétractation entre le support et l'outillage de moulage lors du refroidissement pour mouler une surface moulante de l'outillage de moulage de la forme souhaitée pour le moulage d'une pièce en matériau composite. Ce mode de réalisation est préféré car il ne nécessite pas d'usinage de la surface moulante de l'outillage de moulage.

Selon un autre mode de réalisation, la face moulante de l'outillage de moulage est constituée par la face opposée à celle qui était en contact avec le support jusqu'à l'étape g) de démoulage. Dans ce mode de réalisation, il est alors nécessaire d'effectuer des finitions de manière à obtenir la surface moulante souhaitée pour le moulage d'une pièce en matériau composite. Selon ce mode de réalisation de l'invention, le procédé de fabrication d'un outillage de moulage comprend alors une étape supplémentaire d'usinage de la surface moulante de l'outillage de moulage.

Selon un mode de réalisation de l'invention, à l'étape d), on dispose sur le circuit un deuxième empilement de fibres de renfort de telle manière qu'à l'issue du procédé de fabrication selon l'invention, la hauteur du deuxième empilement de fibres de renfort est sensiblement égale ou supérieure au diamètre externe du tube du circuit de fluide caloporteur. L'ajustement de la quantité de fibres de renfort à disposer est parfaitement à la portée de l'homme, par exemple au moyen d'essais expérimentaux.

Selon un autre mode réalisation de l'invention, on dispose sur le circuit un deuxième empilement de fibres de renfort de telle manière qu'à l'issue du procédé de fabrication selon l'invention, la hauteur du deuxième empilement de fibres de renfort est inférieure au diamètre externe du tube du circuit de fluide caloporteur. Dans ce mode de réalisation de l'invention, la face opposée à celle qui était en contact avec le support jusqu'à l'étape g) de démoulage a alors un aspect gondolé. Cette face ne peut pas constituer une surface moulante de l'outillage de moulage.

Ce mode de réalisation de l'invention présente l'avantage par rapport au précédent d'être moins coûteux. En effet, des économies de matières (fibres de renfort et résine) sont réalisées à l'étape d) où l'on dispose moins de fibres de renfort sur le circuit de fluide caloporteur.

En outre, des expérimentations ont démontré que l'écart entre la température maximale et la température minimale (ΔT) de la surface moulante était sensiblement le même, de l'ordre de 3°C, au cours d'un cycle thermique d'un procédé de moulage d'une pièce en matériau composite, et ce quelle que soit l'épaisseur du deuxième empilement de fibres de renfort imprégnées de résine. Autrement dit, ce dernier mode de réalisation décrit est avantageux d'un point de vue du coût des matières mais en outre, il est aussi performant en ce qui concerne les homogénéités de températures de la surface moulante que le mode de réalisation dans lequel la hauteur du deuxième empilement de fibres de renfort est sensiblement égale ou supérieure au diamètre externe du tube du circuit de fluide caloporteur.

L'invention concerne aussi un outillage de moulage destiné au moulage d'une pièce en matériau composite susceptible d'être obtenu selon le procédé de fabrication d'un outillage de moulage tel que décrit ci-dessus.

De manière préférée, la pièce en matériau composite est une pièce destinée au domaine technique de l'aéronautique, du nautisme ou de l'éolien.

Le procédé de fabrication selon l'invention concilie ainsi une mise en oeuvre technique aisée avec des coûts économiques réduits, tout en ne se heurtant pas à des problèmes de sécurité.

L'invention sera mieux comprise à l'aide de la description détaillée qui est exposée ci-dessous en référence au dessin annexé représentant, à titre d'exemple non limitatif, une forme de réalisation des différents éléments constitutifs de l'outillage de moulage.
La figure 1 est une vue en perspective éclatée des différents éléments constitutifs de l'outillage de moulage et du circuit de fluide caloporteur.
La figure 2 est une vue de face du circuit de fluide caloporteur.

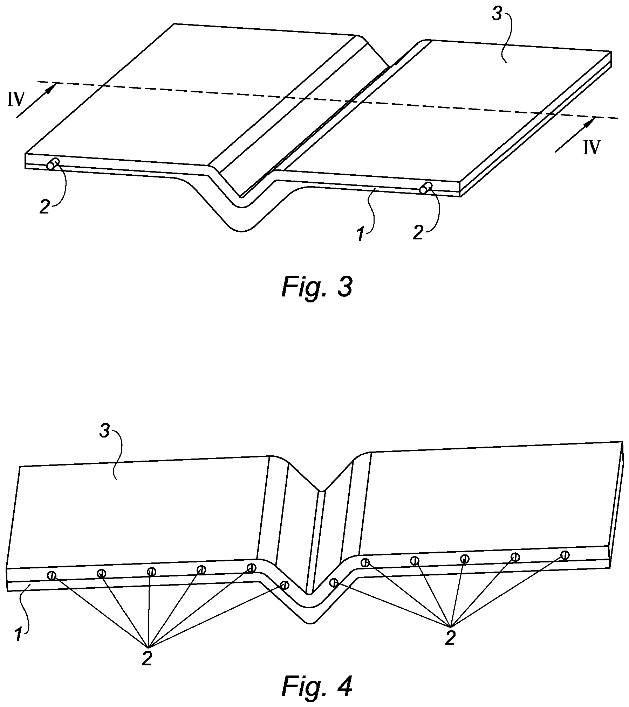

La figure 3 est une vue en perspective des différents éléments constitutifs de l'outillage de moulage et du circuit de fluide caloporteur.
La figure 4 est une vue en coupe des différents éléments constitutifs de l'outillage de moulage et du circuit de fluide caloporteur suivant la ligne IV-IV de la figure 3.

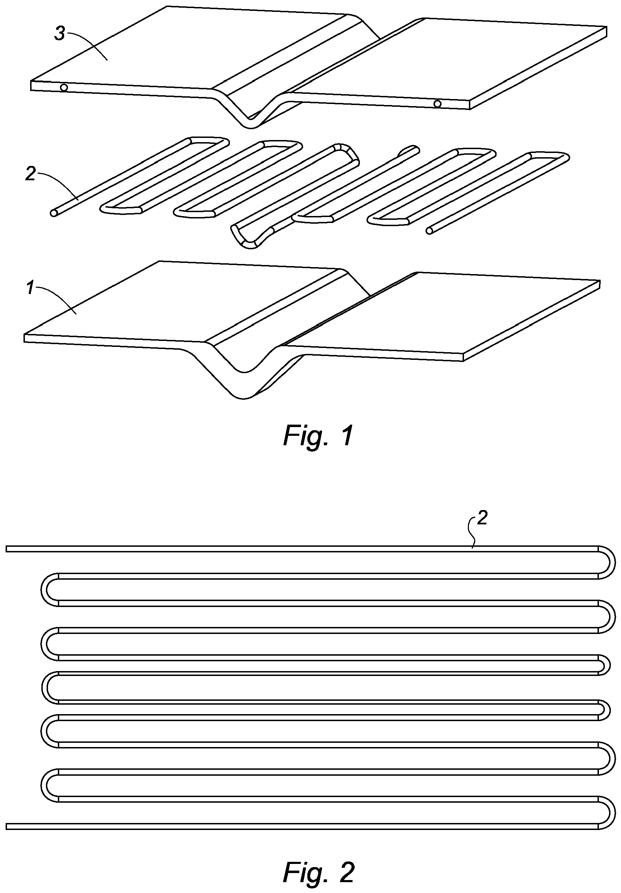

Sur la figure 1 sont représentés :
- un premier empilement 1 de fibres de renfort imprégnées de résine ;
- un deuxième empilement 3 de fibres de renfort imprégnées de résine ;
- un circuit 2 de fluide caloporteur

Les fibres de renfort sont des fibres de carbone imprégnées d'une résine époxyde. Le taux volumique des fibres de carbone est compris entre 55 et 60% par rapport au volume du mélange constitué de fibres de carbone et de la résine époxyde. Le premier empilement 1 de fibres de renfort imprégnées de résine et le deuxième empilement 3 de fibres de renfort imprégnées de résine ont une forme incurvée selon la courbure de la surface de moulage de l'outillage de moulage souhaitée.

Le circuit 2 se présente sous la forme d'un tube. Le matériau constitutif du circuit 2 est de l'INVAR ®. Le circuit 2 a été obtenu en soudant des tubes en INVAR® par la méthode de soudage TIG (TIG étant l'acronyme de Tungsten Inert Gas). La longueur du circuit 2 est d'environ 1 m.

Au cours de l'étape f) du procéde de fabrication de l'outillage de moulage, la résine époxyde présente dans le premier empilement 1 et le deuxième empilement 3 de fibres de renfort se disperse dans l'ensemble de ces empilements 1,3 de fibres de renfort et durcit.

On obtient ainsi un outillage de moulage en un matériau composite de fibres de carbone et de résine époxyde qui comporte un circuit 2 destiné au transport d'un fluide caloporteur.

Un premier outillage de moulage obtenu selon le procédé de fabrication selon l'invention a été décrit ci-dessus. Il s'agissait d'un outillage de moulage réalisé en un matériau composite (mélange de fibres de carbone et de résine époxyde) comprenant un circuit de fluide caloporteur constitué d'INVAR ®.

Le coefficient de dilatation thermique de l'INVAR® est de 1,2.10⁻⁶ K⁻¹ et celui du matériau composite constitué du mélange de fibres de carbone et de résine époxyde tel que détaillé ci-dessus est de 2.10⁻⁶ K⁻¹. Ainsi, ces deux valeurs de coefficient de dilatation thermique sont proches l'une de l'autre.

De plus, un deuxième outillage de moulage a été réalisé. Ce deuixème outillage de moulage se distinguait du premier outillage de moulage uniquement en ce que le matériau du tube formant le circuit de fluide caloporteur était en cuivre. Le cuivre a un coefficient de dilatation thermique de 17.10⁻⁶ K⁻¹. Ainsi, pour ce deuxième outillage de moulage, le coefficient de dilatation thermique du matériau du tube était très différent du coefficient de dilatation thermique du matériau composite que comprend ce deuxième outillage de moulage.

On a soumis le premier et le deuxième outillages de moulage aux conditions suivantes :
- circulation d'eau dans le circuit de fluide caloporteur à une température maximale de 160°C ;
- appareil de chauffage de l'outillage de moulage à une puissance de 12 kW. La vitesse de chauffe maximale était d'environ 10°C/min.

Après 4 à 5 minutes de chauffe, on a constaté pour le deuxième outillage de moulage des fissures au niveau des angles du circuit de fluide caloporteur, ainsi qu'un glissement de ce circuit dans les parties rectilignes de celui-ci. Ces fissures et ce glissement observés proviennent de la dilatation du cuivre du circuit de fluide caloporteur.

Lors de l'élévation de température du deuxième outillage de moulage, le tube en cuivre s'est dilaté de manière plus importante que le reste du deuxième ouillage de moulage constitué d'un mélange de fibres de carbone et de résine époxyde.

Le premier outillage de moulage est demeuré intact, sans aucune fissure et aucun glissement du circuit n'a été relevé.

Ainsi, cet exemple témoigne qu'il convient de choisir de manière scrupuleuse le matériau dont est constitué le tube du circuit de fluide caloporteur en fonction du matériau composite que comprend l'outillage de moulage (à savoir un mélange de fibres de renfort et de résine) pour que l'outillage de moulage puisse être soumis aux températures usuelles de cycle de polymérisation qui sont généralement de l'ordre de 180°C, et ce sans subir aucun dommage (déformations, fissures, voire éclatement).

En ce qui concerne le matériau composite constitué d'un mélange de fibres de carbone et de résine époxyde tel que détaillé ci-dessus, à la différence de l'INVAR ®, le cuivre s'est révélé ne pas être un matériau satisfaisant pour le tube du circuit de fluide caloporteur qui est utilisé dans le cadre du procédé de fabrication selon l'invention.

Le matériau du tube est choisi de manière appropriée pour que son coefficient de dilatation thermique soit proche de celui du matériau composite (à savoir un mélange de fibres de renfort et d'une résine) que comprend l'outillage de moulage.

## Revendications

1. Procédé de fabrication d'un outillage de moulage destiné au moulage d'une pièce en matériau composite, **caractérisé en ce qu'**il comprend les étapes suivantes :
a) On dispose d'un support.
b) On dispose sur le support un premier empilement (1) de fibres de renfort qui sont éventuellement imprégnées d'une résine thermodurcissable ou d'une résine thermoplastique.
c) On dispose sur le premier empilement (1) de fibres de renfort un circuit (2) comprenant au moins un tube en un matériau à faible coefficient de dilatation thermique, ledit circuit (2) ayant la forme d'un circuit de fluide caloporteur adapté à l'outillage de moulage.
d) On dispose sur le circuit (2) un deuxième empilement (3) de fibres de renfort qui sont éventuellement imprégnées d'une résine thermodurcissable ou d'une résine thermoplastique.
e) On comprime l'ensemble constitué par le premier empilement (1) de fibres de renfort, le circuit (2), le deuxième empilement (3) de fibres de renfort, et le cas échéant lorsque les fibres de renfort ne sont pas imprégnées d'une résine thermoplastique ou thermodurcissable, on infuse une résine thermoplastique ou thermodurcissable.
f) On effectue un cycle thermique, ledit cycle thermique étant conçu de manière à durcir la résine thermodurcissable ou la résine thermoplastique pour obtenir une forme moulée.
g) On démoule la forme moulée obtenue à l'issue de l'étape f).

2. Procédé de fabrication d'un outillage de moulage selon la revendication 1, **caractérisé en ce que** le matériau à faible coefficient de dilatation thermique est choisi parmi les matériaux dont le coefficient de dilatation thermique est inférieur à 25.10⁻⁶ K⁻¹.

3. Procédé de fabrication d'un outillage de moulage selon la revendication 2, **caractérisé en ce que** le matériau à faible coefficient de dilatation thermique est choisi dans le groupe constitué par l'acier, l'acier inoxydable, le cuivre, le carbone, les alliages métalliques, le titane, les céramiques et les matériaux composites.

4. Procédé de fabrication d'un outillage de moulage selon l'une quelconque des revendications précédentes, **caractérisé en ce que** le matériau à faible coefficient de dilatation thermique est l'INVAR®.

5. Procédé de fabrication d'un outillage de moulage selon l'une quelconque des revendications précédentes, **caractérisé en ce qu'**à l'étape b), les fibres de renfort ont été imprégnées d'une résine thermoplastique ou thermodurcissable, l'ensemble constitué par les fibres de renfort et la résine se présentant sous la forme d'un tissu composite et **en ce qu'**on réalise l'étape b) en répétant successivement les opérations suivantes jusqu'à l'obtention d'un premier empilement (1) de fibres de renfort d'une épaisseur déterminée :
i. on dispose une pluralité de tissus composites les uns sur les autres de manière à former un empilement de tissus composites ;
ii. on comprime l'empilement de tissus composites en instaurant le vide ;
iii. optionnellement, on soumet l'empilement de tissus composites à un cycle thermique approprié pour durcir la résine dont sont imprégnées les fibres de renfort des tissus composites.

6. Procédé de fabrication d'un outillage de moulage selon l'une quelconque des revendications 1 à 5, **caractérisé en ce qu'**à l'étape d), les fibres de renfort ont été imprégnées d'une résine thermoplastique ou thermodurcissable, l'ensemble constitué par les fibres de renfort et la résine se présentant sous la forme d'un tissu composite et **en ce qu'**on réalise l'étape d) en répétant successivement les opérations suivantes jusqu'à l'obtention d'un deuxième empilement (3) de fibres de renfort d'une épaisseur déterminée:
i. on dispose une pluralité de tissus composites les uns sur les autres de manière à former un empilement de tissus composites ;
ii. on comprime l'empilement de tissus composites en instaurant le vide ;
iii. optionnellement, on soumet l'empilement de tissus composites à un cycle thermique approprié pour durcir la résine dont sont imprégnées les fibres de renfort des tissus composites,
et on achève la répétition desdites opérations i) à ii), le cas échéant i) à iii), par une étape i).

7. Procédé de fabrication d'un outillage de moulage selon l'une quelconque des revendications 1 à 4, **caractérisé en ce qu'**on réalise l'étape b) de la manière suivante :
- On dispose des fibres de renfort sur le support ;
- On comprime les fibres de renfort en instaurant le vide ;
- On infuse de la résine thermodurcissable ou thermoplastique de manière à imprégner de résine les fibres de renfort.

8. Procédé de fabrication d'un outillage de moulage selon la revendication 7, **caractérisé en ce qu'**on réalise l'étape e) de la manière suivante :
- on comprime l'ensemble constitué par le premier empilement (1) de fibres de renfort, le circuit (2) et le deuxième empilement (3) de fibres de renfort en instaurant le vide ;
- on infuse une résine thermoplastique ou thermodurcissable de manière à imprégner de résine les fibres de renfort.

## Patentansprüche

1. Verfahren zur Herstellung eines Formwerkzeugs, bestimmt zum Formen eines Werkstücks aus Verbundwerkstoff, **dadurch gekennzeichnet, dass** es folgende Schritte umfasst:
a) Es ist eine Unterlage vorhanden.
b) Man legt auf die Unterlage ein erstes Schichtpaket (1) von Verstärkungsfasern, die unter Umständen mit einem wärmehärtenden Harz oder einem thermoplastischen Harz imprägniert sind.
c) Man leg auf das erste Schichtpaket (1) von Verstärkungsfasern einen Kreislauf (2), umfassend zumindest eine Röhre aus einem Werkstoff mit niedrigem Wärmeausdehnungskoeffizienten, wobei der Kreislauf (2) die Form eines Kreislaufs für Wärmeträgermedien hat, passend für das Formwerkzeug.
d) Man legt auf den Kreislauf (2) ein zweites Schichtpaket (3) von Verstärkungsfasern, die unter Umständen mit einem wärmehärtenden Harz oder einem thermoplastischen Harz imprägniert sind.
e) Man presst die gesamte Einheit, bestehend aus dem ersten Schichtpaket (1) von Verstärkungsfasern, dem Kreislauf (2), dem zweiten Schichtpaket (3) von Verstärkungsfasern, und gegebenenfalls, falls die Verstärkungsfasern nicht mit einem thermoplastischen oder wärmehärtenden Harz imprägniert sind, lässt man ein thermoplastisches oder wärmehärtendes Harz einziehen.
f) Man führt einen thermischen Zyklus aus, wobei der thermische Zyklus so beschaffen ist, dass er das wärmehärtende Harz oder das thermoplastische Harz aushärtet, um ein Formteil zu erhalten.
g) Man entnimmt das am Ende von Schritt f) erhaltene Formteil aus der Form.

2. Verfahren zur Herstellung eines Formwerkzeugs nach Anspruch 1, **dadurch gekennzeichnet, dass** der Werkstoff mit niedrigem Wärmeausdehnungskoeffizienten unter den Werkstoffen gewählt wird, deren Wärmeausdehnungskoeffizient unter 25,10⁻⁶ K⁻¹ liegt.

3. Verfahren zur Herstellung eines Formwerkzeugs nach Anspruch 2, **dadurch gekennzeichnet, dass** der Werkstoff mit niedrigem Wärmeausdehnungskoeffizienten aus der Gruppe gewählt wird, die aus Stahl, Edelstahl, Kupfer, Kohlenstoff, Metall-Legierungen, Titan, Keramiken und Verbundwerkstoffen besteht.

4. Verfahren zur Herstellung eines Formwerkzeugs nach einem der vorangehenden Ansprüche, **dadurch gekennzeichnet, dass** der Werkstoff mit niedrigem Wärmeausdehnungskoeffizienten INVAR® ist.

5. Verfahren zur Herstellung eines Formwerkzeugs nach einem der vorangehenden Ansprüche, **dadurch gekennzeichnet, dass** in Schritt b) die Verstärkungsfasern mit einem thermoplastischen oder wärmehärtenden Harz imprägniert wurden, wobei die gesamte, aus den Verstärkungsfasern und dem Harz bestehende Einheit die Form eines Verbundgewebes aufweist, und dadurch, dass der Schritt b) unter aufeinanderfolgender Wiederholung der folgenden Arbeitsgänge ausgeführt wird, bis man ein erstes Schichtpaket (1) von Verstärkungsfasern einer bestimmten Dicke erhält:
i. man legt eine Vielzahl von Verbundgeweben übereinander, um ein Schichtpaket von Verbundgeweben zu bilden;
ii. man presst das Schichtpaket von Verbundgeweben unter Einwirkung von Vakuum;
iii. optional unterzieht man das Schichtpaket von Verbundgeweben einem Wärmezyklus, geeignet zum Aushärten des Harzes, mit dem die Verstärkungsfasern der Verbundgewebe imprägniert sind.

6. Verfahren zur Herstellung eines Formwerkzeugs nach einem der Ansprüche 1 bis 5, **dadurch gekennzeichnet, dass** in Schritt d) die Verstärkungsfasern mit einem thermoplastischen oder wärmehärtenden Harz imprägniert wurden, wobei die gesamte, aus den Verstärkungsfasern und dem Harz bestehende Einheit die Form eines Verbundgewebes aufweist, und dadurch, dass der Schritt d) unter aufeinanderfolgender Wiederholung der folgenden Arbeitsgänge ausgeführt wird, bis man ein zweites Schichtpaket (3) von Verstärkungsfasern einer bestimmten Dicke erhält:
i. man legt eine Vielzahl von Verbundgeweben übereinander, um ein Schichtpaket von Verbundgeweben zu bilden;
ii. man presst das Schichtpaket von Verbundgeweben unter Einwirkung von Vakuum;
iii. optional unterzieht man das Schichtpaket von Verbundgeweben einem Wärmezyklus, geeignet zum Aushärten des Harzes, mit dem die Verstärkungsfasern der Verbundgewebe imprägniert sind,
und man die Wiederholung der Verfahrensschritte i) bis ii), gegebenenfalls i) bis iii) mit einem Schritt i) beendet.

7. Verfahren zur Herstellung eines Formwerkzeugs nach einem der Ansprüche 1 bis 4, **dadurch gekennzeichnet, dass** der Schritt b) auf folgende Weise ausgeführt wird:
- man legt Verstärkungsfasern auf die Unterlage;
- man presst die Verstärkungsfasern unter Einwirkung von Vakuum;
- man lässt wärmehärtendes oder thermoplastisches Harz einziehen, so dass die Verstärkungsfasern mit Harz imprägniert sind.

8. Verfahren zur Herstellung eines Formwerkzeugs nach Anspruch 7, **dadurch gekennzeichnet, dass** der Schritt e) auf folgende Weise ausgeführt wird:
- man presst die gesamte Einheit, bestehend aus dem ersten Schichtpaket (1) von Verstärkungsfasern, dem Kreislauf (2) und dem zweiten Schichtpaket (3) von Verstärkungsfasern unter Einwirkung von Vakuum;
- man lässt wärmehärtendes oder thermoplastisches Harz einziehen, so dass die Verstärkungsfasern mit Harz imprägniert sind.

## Claims

1. A method for manufacturing a molding tool intended for molding a part made of composite material, **characterized in that** it comprises the following steps:
a) A support is provided.
b) On the support is disposed a first stacking (1) of reinforcing fibers which are possibly impregnated with a thermosetting or a thermoplastic resin.
c) On the first stacking (1) of reinforcing fibers is disposed a circuit (2) comprising at least one tube made of a material of low thermal expansion coefficient, said circuit (2) having the shape of a heat carrying fluid circuit adapted to the molding tool.
d) On the circuit (2) is disposed a second stacking (3) of reinforcing fibers which are possibly impregnated with a thermosetting or a thermoplastic resin.
e) The set constituted by the first stacking (1) of reinforcing fibers, the circuit (2), the second stacking (3) of reinforcing fibers, is compressed, and where appropriate when the reinforcing fibers are not impregnated with a thermoplastic or a thermosetting resin, a thermoplastic or a thermosetting resin is infused.
f) A thermal cycle is carried out, said thermal cycle being designed in such a manner as to harden the thermosetting or the thermoplastic resin in order to obtain a molded shape.
g) The molded shape obtained from step f) is stripped.

2. The method for manufacturing a molding tool according to claim 1, **characterized in that** the material with a low thermal expansion coefficient is selected from the materials of which the thermal expansion coefficient is lower than 25.10⁻⁶ K-1

3. The method for manufacturing a molding tool according to claim 2, **characterized in that** the material with a low thermal expansion coefficient is selected from the group consisting of steel, stainless steel, copper, carbon, metal alloys, titanium, ceramics and composite materials.

4. The method for manufacturing a molding tool according to any one of the preceding claims, **characterized in that** the material with a low thermal expansion coefficient is INVAR®.

5. The method for manufacturing a molding tool according to any one of the preceding claims, **characterized in that** in step b), the reinforcing fibers have been impregnated with a thermoplastic or a thermosetting resin, the set constituted by the reinforcing fibers and the resin being in the form of a composite fabric and **in that** step b) is carried out by successively repeating the following operations until obtaining a first stacking (1) of reinforcing fibers of a determined thickness:
i. a plurality of composite fabrics are disposed on each other in such a manner as to form a stacking of composite fabrics;
ii. the stacking of composite fabrics is compressed by establishing vacuum;
iii. optionally, the stacking of composite fabrics is subjected to an appropriate thermal cycle for hardening the resin of which are impregnated the reinforcing fibers of the composite fabrics.

6. The method for manufacturing a molding tool according to any one of claims 1 to 5, **characterized in that** in step d), the reinforcing fibers were impregnated with a thermoplastic or a thermosetting resin, the set constituted by the reinforcing fibers and the resin being in the form of a composite fabric and **in that** step d) is carried out by successively repeating the following operations until obtaining a second stacking (3) of reinforcing fibers of a determined thickness:
i. a plurality of composite fabrics are disposed on each other in such a manner as to form a stacking of composite fabrics;
ii. the stacking of composite fabrics is compressed by establishing vacuum;
iii. optionally, the stacking of composite fabrics is subjected to an appropriate thermal cycle for hardening the resin of which are impregnated the reinforcing fibers of the composite fabrics,
and the repetition of said operations i) to ii) is finished, where appropriate i) to iii), by a step i).

7. The method for manufacturing a molding tool according to any one of claims 1 to 4, **characterized in that** step b) is carried out in the following manner:
- Reinforcing fibers are disposed on the support;
- The reinforcing fibers are compressed by establishing vacuum;
- Thermosetting or thermoplastic resin is infused in such a manner as to impregnate the reinforcing fibers with resin.

8. The method for manufacturing a molding tool according to claim 7, **characterized in that** step e) is carried out in the following manner:
- the set constituted by the first stacking (1) of reinforcing fibers, the circuit (2) and the second stacking (3) of reinforcing fibers is compressed by establishing vacuum;
- a thermoplastic or a thermosetting resin is infused in such a manner as to impregnate the reinforcing fibers with resin.
